# EUROPEAN PATENT SPECIFICATION

(11) **EP 4 111 380 B1**
(45) Date of publication and mention of the grant of the patent: **25.03.2026**
(21) Application number: 20945087.3
(22) Date of filing: 16.07.2020
(51) Int. Cl.: G06N 3/08, G06F 17/00, G06N 20/00, H04L 9/40, G06N 3/044, G06N 3/0442, G06N 3/0895, G06N 3/09

(54) **NETWORK DEVICE AND METHOD FOR HOST IDENTIFIER CLASSIFICATION**
NETZWERKVORRICHTUNG UND VERFAHREN ZUR HOST-IDENTIFIKATOR-KLASSIFIZIERUNG
DISPOSITIF DE RÉSEAU ET PROCÉDÉ DE CLASSIFICATION D'IDENTIFIANTS D'HÔTES

(43) Date of publication of application: 04.01.2023
(73) Proprietor: Huawei Technologies Co., Ltd., Shenzhen, Guangdong 518129, (CN)
(72) Inventor: BEN HOUIDI, Zied, Shenzhen, Guangdong 518129 (CN); SHI, Hao, Shenzhen, Guangdong 518129 (CN)
(74) Representative: Roth, Sebastian
(86) International application number: PCT/CN2020/102259
(87) International publication number: WO 2022/011624

(56) References cited:
- WO-A1-2020/046807
- CN-A- 104 486 461
- CN-A- 104 486 461
- CN-A- 108 200 015
- CN-A- 110 532 564
- CN-A- 110 830 607
- US-A1- 2020 027 031

## Description

### TECHNICAL FIELD

The present disclosure relates to the field of computer networks, machine learning (ML), and artificial intelligence (AI). More specifically, a network device and a corresponding method are provided, which allow for an ML-based classification of host identifiers in encrypted network traffic (e.g. occurring when loading a web page). The ML-based classification can, in particular, include natural language processing (NLP) capabilities.

### BACKGROUND

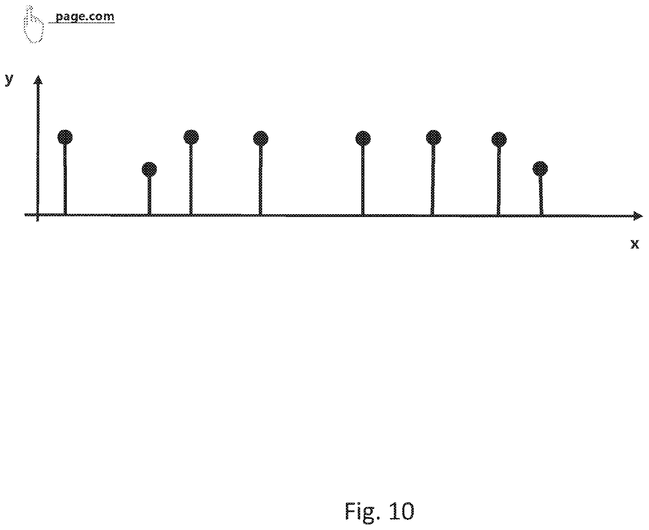

Web pages have become utterly complex. A typical web page may, e.g., require to download around 70 objects (including resources such as images, cascading style sheets (CSS), or java-script files) and to open more than 50 network flows to get such resources. FIG. 10 schematically illustrates the complexity of a web page "page.com". Each vertical arrow in the figure corresponds to a different network flow, which is created for loading a resource, wherein the x axis illustrates a temporal course of created network flows and the y axis illustrates a size (e.g. transmitted bytes) of the respective network flow.

However, when network traffic is encrypted, it is very difficult for a network provider to correlate networking events observed in a flow log (e.g. a flow start time, a flow size, or a flow duration) with a behavior in an upper layer of a network. When, e.g., a router observes a flow log relating to web browsing sessions, it is not possible to tell to which web page each network flow corresponds. As described above, a single web page loading event causes a browser to fetch a high number of resources, thereby opening multiple network flows in parallel. The number of network flows increases even more, when multiple pages are viewed in parallel. This happens, for instance, when a user opens multiple browser tabs, or when multiple users access a network using different devices. From a network perspective, in such a case, it is not possible to distinguish multiple users (based on the source IP address of traffic), who will thus appear as a single user to a network provider.

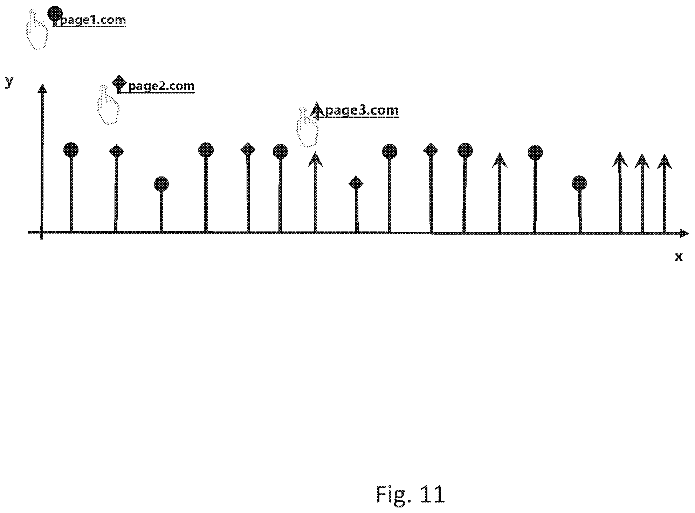

As illustrated in FIG. 11, three web pages (page1.com, page2.com, page3.com) are accessed by a single user, wherein network traffic flowing between the user and each web page is encrypted. In FIG. 11, each web page is represented by a different type of arrow. Opening the three web pages results in the initiation of multiple network flows for downloading necessary resources to correctly display the web page.

A network flow can be identified by a five-tuple of identifiers (source IP address, destination IP address, source port, destination port, and protocol type). At a browser level, when a user clicks on a web page (e.g. page1.com), the browser first performs a DNS resolution to map the DNS name of page1.com to a corresponding IP address. Then, the browser issues an HTTP GET request to this IP address to fetch a main page. Once the main page is received, the browser has access to a list of resources that are embedded in the main page and need to be downloaded. For each of these resources, identified by a domain name and a path to the resource, the browser performs a DNS query to get the IP address and an HTTP GET request to download the resource. This procedure results in the multiple flows that are illustrated in FIG. 11.

The domain name or network flow that is necessary to download a main page can be called core domain (e.g. page1.com, page2.com, or page3.com). The remainder of the domain names and their corresponding flows can be referred to as support domains (since they are used as support to build the main page by providing the resources required by the main page).

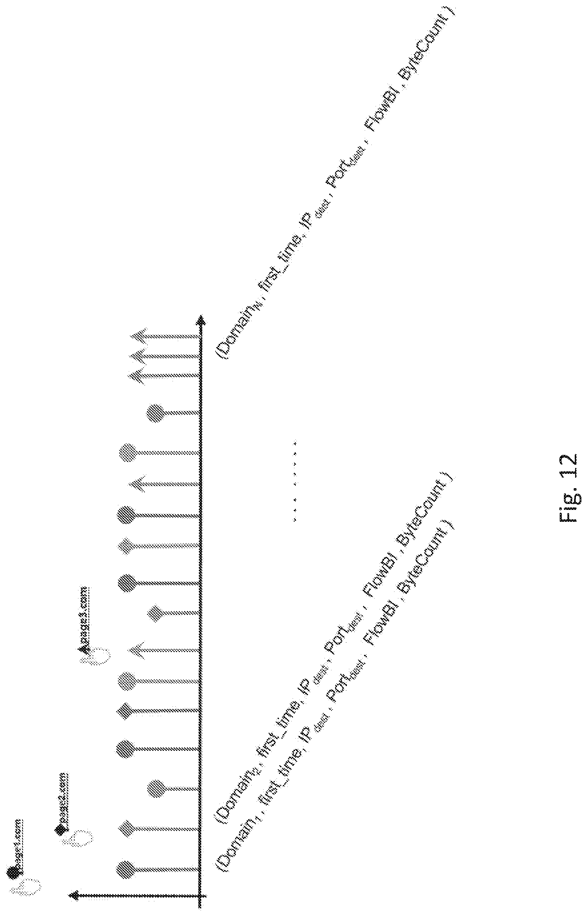

Given a time-series of network flow start events identified by network flow identification information (including domain information, start time information, a destination IP, a destination port, as e.g. illustrated in FIG. 12), it is not possible to determine if a network flow corresponds to a core domain or a support domain, and to associate a network flow of a support domain to its corresponding core domain.

US 2020027031 A1 discloses a method performed by a network device including tracking a plurality of attributes associated with a plurality of unique client device identifiers stored in a tracking table; deriving a training data set based on the plurality of attributes; generating a plurality of clusters by inputting the derived training data set to an unsupervised machine learning mechanism; receiving a labeling of the plurality of unique client device identifiers in the tracking table based at least on the plurality of clusters; generating a plurality of classifiers by inputting the labelled tracking table to a supervised machine learning mechanism; and classifying a new unique client device identifier in the tracking table based at least on the plurality of classifiers.

CN 104486461 A discloses a domain name classification method and device and a domain name recognition method and system.

### SUMMARY

In view of the above-mentioned problems, an objective of embodiments of the present disclosure is to improve the analysis of encrypted network traffic.

This and/or other objectives may be achieved by embodiments of the present disclosure as described in the enclosed independent claims. Advantageous implementations of embodiments of the present disclosure are further defined in the dependent claims.

A first aspect of the present disclosure provides a network device for host identifier classification, wherein the network device is configured to obtain a sequence of host identifiers, each host identifier corresponding to a flow of encrypted network traffic; apply an unsupervised learning technique to the sequence of host identifiers to learn a vector of a high-dimensional space for each host identifier in the sequence of host identifiers; obtain a labelled ground truth comprising labels corresponding to a host identifier; and apply a supervised learning technique to each vector, based on the labelled ground truth, to classify the corresponding host identifier, wherein each host identifier comprises at least one of a domain name and an IP address.

This is beneficial, as host identifiers in encrypted network traffic can be classified, and a structure of a web page (which makes use of said host identifiers) can be analyzed, although the corresponding network traffic is encrypted. Analyzing the web page structure based on the classified host identifiers also allows to assign a performance indicator to a web page.

In particular, a high-dimensional vector is a vector of a predefined size, preferably in the range of 10 to 10.000 dimensions, depending on the number of unique host identifiers, more preferably in the range of 200 to 400 dimensions for a corpus of 10.000 unique host identifiers, whose values are obtained by means of the step of applying an unsupervised learning technique to the sequence of host identifiers.

In particular, the flow comprises at least one of a source address, a destination addresses, a source port, a destination port, a transport protocol. A queried DNS domain name corresponding to the IP address can complement flow information, and can be used as a host identifier.

In particular, one label in the labelled ground truth can correspond to one host identifier or can correspond to a plurality of host identifiers. In other words, a label can be a quality that describes a host identifier or many host identifiers. A label can e.g. be "core domain", "support domain", "good domain" or "bad domain".

In particular, the labelled ground truth may be a small ground truth that can be reasonably collected in a lab. In particular, a small ground truth can have a size of 1.000 to 100.000 sessions, preferably 9.000 to 11.000 sessions, each session containing for example 1 to 100 concurrent web page visits, preferably 9 to 11 concurrent web page visits that are opened in parallel.

Each host identifier comprising at least one of a domain name and an IP address ensures that several types of host identifiers, such as a domain name and/or an IP address, can be classified by the network device.

In particular, the host identifier may comprise a Fully-Qualified Host Name (FQHN). In particular, the domain name may be a domain name of a web page. In particular, the IP address may be an IP address of a web page. In particular, the IP address may be an IPv4 or an IPv6.

In a further implementation form of the first aspect, the unsupervised learning technique comprises at least one of a natural language processing technique and a word embedding technique.

This is beneficial, as the natural language processing technique and/or the word embedding technique enables classifying the host identifiers, although the network flow to which they relate is encrypted. This also ensures that the network device can classify any kind of network identifiers, and does not need to be trained beforehand. Due to using the natural language processing technique and/or the word embedding technique, the network device can also classify domain names of different languages or countries without the need for human interaction.

In a further implementation form of the first aspect, the unsupervised learning technique comprises a char embedding technique.

This is beneficial, as the char embedding technique enables classifying the host identifiers although the network flow to which they relate is encrypted.

In a further implementation form of the first aspect, the network device is further configured to apply the supervised learning technique to each vector to classify the corresponding host identifier into a first group or a second group, corresponding to at least two labels comprised in the labelled ground truth.

This is beneficial, as a precise manner of classifying the host identifiers is provided, i.e. classifying them into a first and a second group.

In particular, each vector represents a semantic of the corresponding host identifier. In particular, host identifiers with a similar semantic are located close to each other in the high-dimensional space.

In particular, a label also includes a class or can be called class.

In a further implementation form of the first aspect, the network device is further configured to apply an unsupervised clustering technique to separate the sequence of host identifiers and the corresponding vectors into groups that have distinct characteristics.

This is beneficial, as the unsupervised clustering technique makes the learning of the vectors more effective and precise.

In a further implementation form of the first aspect, the network device is further configured to apply the supervised learning technique by applying a machine learning sequence classification model to each vector.

This is beneficial, as the application of the machine learning sequence classification model makes the classification of the host identifiers more effective and precise.

In particular, the supervised learning technique is semi-supervised. This is in particular because the supervised learning technique relies on an unsupervised learning technique and on a labelled ground truth.

In a further implementation form of the first aspect, the machine learning sequence classification model is configured to be trained on the labelled ground truth.

This is beneficial, as training the machine learning sequence classification model based on the labelled ground truth makes the classification of the host identifiers more effective and precise.

In particular, the labelled ground truth is pre-stored in the network device.

In particular, the labelled ground truth is obtained in a laboratory environment and provided to the network device for training. It can be sufficient to provide the trained model alone to the network device.

In a further implementation form of the first aspect, the labels of the labelled ground truth correspond to the first group or the second group.

This is beneficial, as a precise manner of classifying the host identifiers is provided, i.e. classifying them into a first and a second group, wherein the groups relate to the labels in the labelled ground truth.

In a further implementation form of the first aspect, the first group comprises host identifiers, each of which identifying a web page.

This is beneficial, as it allows classifying host identifiers which identify a web page, although the corresponding network flow is encrypted.

In a further implementation form of the first aspect, the second group comprises host identifiers, each of which identifying a resource loaded by one of the identified web pages.

This is beneficial, as it allows to classify host identifiers which identify a resource used by a web page, although the corresponding network flow is encrypted.

In a further implementation form of the first aspect, the network device is further configured to apply the supervised learning technique to each vector to classify the corresponding host identifier into the first group, the second group, or a third group, wherein the second group comprises the third group, and wherein the third group comprises host identifiers, each of which identifying a resource loaded by a same web page of the identified web pages.

This is beneficial, as it allows classifying host identifiers which identify a resource used by one and the same web page, although the corresponding network flow is encrypted. That is, network traffic that is going to be caused by visiting a web page can be predicted, even if the corresponding network flow is encrypted.

In particular, classifying the host identifiers into the third group comprises associating each of the host identifiers of the third group with a pointer that points to the same host identifier in the first group.

In particular, the labels of the labelled ground truth correspond to the first group, the second group, and the third group.

In a further implementation form of the first aspect, the machine learning sequence classification model is based on a long short term memory (LSTM) neural network, a stacked bi LSTM neural network, or a pointer network architecture.

This is beneficial, as it makes the machine learning sequence classification model more effective and precise.

A second aspect of the present disclosure provides a method for host identifier classification, the method comprising obtaining, by a network device, a sequence of host identifiers, each host identifier corresponding to a flow of encrypted network traffic; applying, by the network device, an unsupervised learning technique to the sequence of host identifiers to learn a vector of a high-dimensional space for each host identifier in the sequence of host identifiers, obtaining, by the network device, a labelled ground truth comprising labels corresponding to a host identifier; and applying, by the network device, a supervised learning technique to each vector, based on the labeled ground truth, to classify the corresponding host identifier, wherein each host identifier comprises at least one of a domain name and an IP address.

In a further implementation form of the second aspect, the unsupervised learning technique comprises at least one of a natural language processing technique and a word embedding technique.

In a further implementation form of the second aspect, the unsupervised learning technique comprises a char embedding technique.

In a further implementation form of the second aspect, the method further includes applying, by the network device, the supervised learning technique to each vector to classify the corresponding host identifier into a first group or a second group, corresponding to at least two labels comprised in the labelled ground truth.

In a further implementation form of the second aspect, the method further includes applying, by the network device, an unsupervised clustering technique to separate the sequence of host identifiers and the corresponding vectors into groups that have distinct characteristics.

In a further implementation form of the second aspect, wherein the network device is configured to apply the supervised learning technique by applying a machine learning sequence classification model to each vector.

In a further implementation form of the second aspect, the machine learning sequence classification model is configured to be trained on the labelled ground truth.

In a further implementation form of the second aspect, the labels of the labelled ground truth correspond to the first group or the second group.

In a further implementation form of the second aspect, the first group comprises host identifiers, each of which identifying a web page.

In a further implementation form of the second aspect, the second group comprises host identifiers, each of which identifying a resource loaded by one of the identified web pages.

In a further implementation form of the second aspect, the method further includes applying, by the network device, the supervised learning technique to each vector to classify the corresponding host identifier into the first group, the second group, or a third group, wherein the second group comprises the third group, and wherein the third group comprises host identifiers, each of which identifying a resource loaded by a same web page of the identified web pages.

In a further implementation form of the second aspect, the machine learning sequence classification model is based on a LSTM neural network, a stacked bi LSTM neural network, or a pointer network architecture.

The second aspect and its implementation forms include the same advantages as the first aspect and its respective implementation forms.

A third aspect of the present disclosure provides a computer program product comprising instructions which, when executed by a computer, cause the computer to carry out the steps of the method of the second aspects or any of its implementation forms.

The third aspect and its implementation forms include the same advantages as the second aspect and its respective implementation forms.

A fourth aspect of the present disclosure provides a non-transitory computer-readable storage medium comprising instructions which, when executed by a computer, cause the computer to carry out the steps of the method of the second aspect or any of its implementation forms.

The fourth aspect and its implementation forms include the same advantages as the second aspect and its respective implementation forms.

It has to be noted that all devices, elements, units and means described in the present application could be implemented in the software or hardware elements or any kind of combination thereof. All steps which are performed by the various entities described in the present application as well as the functionalities described to be performed by the various entities are intended to mean that the respective entity is adapted to or configured to perform the respective steps and functionalities. Even if, in the following description of specific embodiments, a specific functionality or step to be performed by external entities is not reflected in the description of a specific detailed element of that entity which performs that specific step or functionality, it should be clear for a skilled person that these methods and functionalities can be implemented in respective software or hardware elements, or any kind of combination thereof.

### BRIEF DESCRIPTION OF DRAWINGS

The above-described aspects and implementation forms of the present disclosure will be explained in the following description of specific embodiments in relation to the enclosed drawings, in which
- FIG. 1: shows a schematic view of a network device according to an embodiment of the present disclosure;
- FIG. 2: shows a schematic view of a network device according to an embodiment of the present disclosure in more detail;
- FIG. 3: shows a schematic view of determining groups of host identifiers according to the present disclosure;
- FIG. 4: shows a schematic view of an operating manner according to the present disclosure;
- FIG. 5: shows another schematic view of an operating manner according to the present disclosure;
- FIG. 6: shows another schematic view of an operating manner according to the present disclosure;
- FIG. 7: shows another schematic view of an operating manner according to the present disclosure;
- FIG. 8: shows another schematic view of an operating manner according to the present disclosure;
- FIG. 9: shows a flowchart of a method according to an embodiment of the present disclosure;
- FIG. 10: shows a schematic view of conventional network flow analysis;
- FIG. 11: shows another schematic view of conventional network flow analysis; and
- FIG. 12: shows another schematic view of conventional network flow analysis.

### DETAILED DESCRIPTION OF EMBODIMENTS

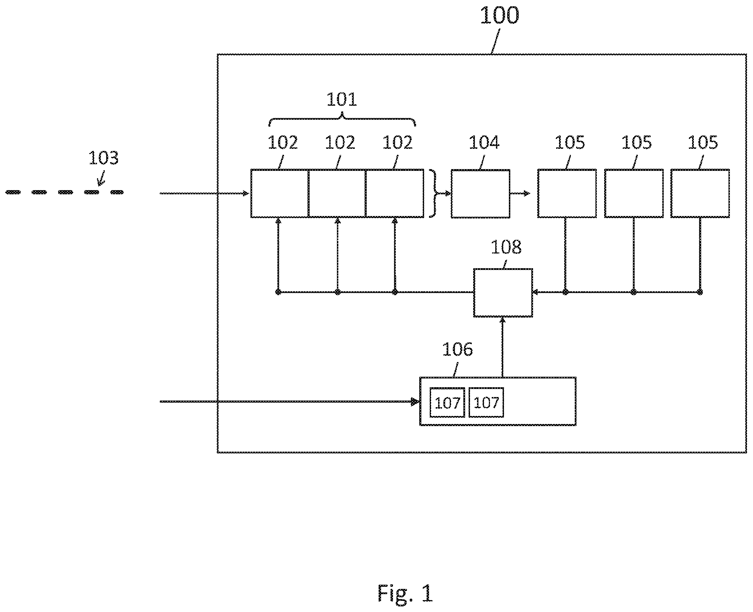

FIG. 1 shows a schematic view of a network device 100 according to an embodiment of the present disclosure. The network device 100 is for host identifier classification. To this end, the network device 100 is configured to obtain a sequence 101 of host identifiers 102, each host identifier 102 corresponding to a flow of encrypted network traffic 103. In FIG. 1, three host identifiers 102 are shown in the sequence 101. However, the network device 100 can process any number of host identifiers 102, as long as there is at least one host identifier 102. The host identifiers 102 in particular correspond to different flows of encrypted network traffic 103. The host identifiers 102 alternatively may also correspond to one and the same flow of encrypted network traffic 103. Each host identifier comprises at least one of a domain name and an IP address.

The network device 100 is further configured to apply an unsupervised learning technique 104 to the sequence 101 of host identifiers 102 to learn a vector 105 of a high-dimensional space for each host identifier 102 in the sequence 101 of host identifiers 102. Again, while three vectors 105 are shown in FIG. 1, the network device 100 can learn any number of vectors 105, depending on the number of corresponding host identifiers 102.

The network device 100 is further configured to obtain a labelled ground truth 106 comprising labels 107 corresponding to a host identifier 102. One label 107 may in particular correspond to multiple host identifiers 102. That is, the number of labels 107 can be lower than the number of host identifiers 102 in the sequence 101. Therefore, only two labels 107 are shown in FIG. 1. However, there can be any number of labels 107 in the labelled ground truth 106.

The labelled ground truth 106 is not necessarily generated in the network device 100 itself, but for example in a laboratory environment (external to the network device 100) and is then provided to the network device 100.

The network device 100 is further configured to apply a supervised learning technique 108 to each vector 105, based on the labelled ground truth 106, to classify the corresponding host identifier 102. Such a classification e.g. may allow to determine, if a host identifier 102 in a flow 103 corresponds to a core domain, or a support domain. In other words, the classification e.g. may allow to determine, if a host identifier 102 and its corresponding flow are used to load a web page (that is, a main page including references to resources), or to load a resource (such as an image, and audio or video file, a CSS, or a java-script) that is required by the web page.

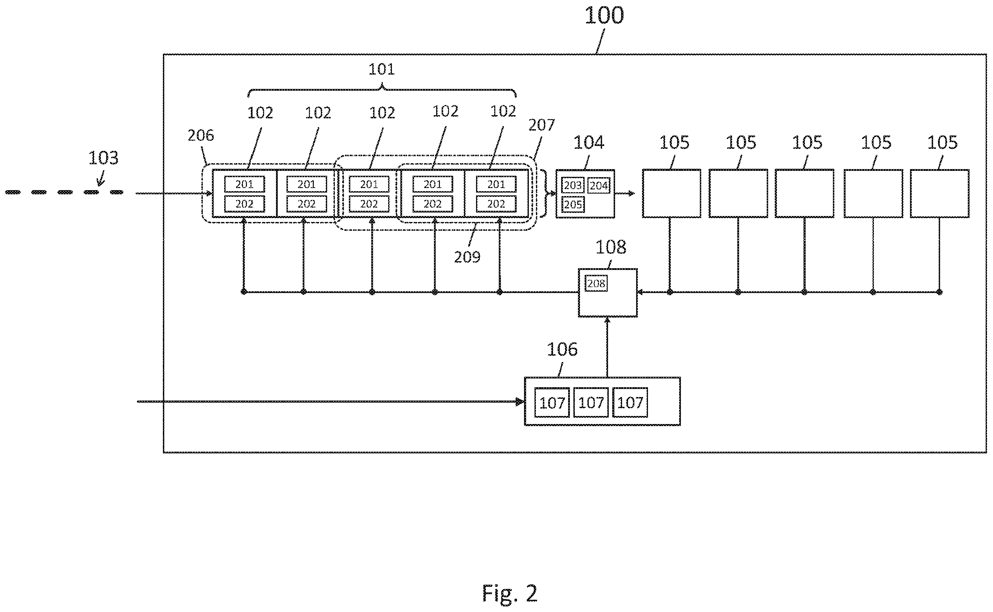

FIG. 2 shows a schematic view of a network device 100 according to an embodiment of the present disclosure in more detail. The network device 100 shown in FIG. 2 comprises all features and functionality of the network device 100 of FIG. 1, as well as the following optional features:
As it is illustrated in FIG. 2, a host identifier 102 comprises at least one of a domain name 201 and an IP address 202. That is, a domain name 201 and/or an IP address 202 can be classified by the network device 100.

As it is further illustrated in FIG. 2, the unsupervised learning technique 104 optionally may comprise at least one of an NLP technique 203 and a word embedding technique 204.

In other words, an NLP technique 203 and/or a word embedding technique 204 can be used as a first step, to embed host identifiers 102 (domain names or IP addresses) in a high-dimensional space (e.g. the vectors 105).

Afterwards, and as it is going to be described below, in a second step, these embeddings optionally can be used as an input to a supervised learning technique 108 (e.g. a ML sequence classification model) to perform various tasks like detecting if an observed domain name or IP address belongs to a core domain or support domain, and clustering of domains or IP addresses relating to a same page.

The unsupervised learning technique 104 that is applied to production network traffic (e.g. the flow of encrypted network traffic 103), and which uses the NLP technique 203 and/or the word embedding technique 204, treats host identifiers 102 (domain names 201 and/or an IP addresses 202) like words of a natural language. Sequences of these words in production network traffic can be used by the network device 100 to train word embeddings to obtain vectors 105 (which may include a vector "name2vec", or a vector "ip2vec", that correspond to domain names 201, or to IP addresses 202).

NLP word embedding techniques (e.g. the NLP technique 203 and/or the word embedding technique 204) allow to devise rich word representations by transforming each word (e.g. each host identifier 102) into a high-dimensional vector 105 that carries information about semantics of the word. In this resulting high-dimensional space, words that have a similar meaning are located closely together. According to an example, the principle of word embedding in natural languages can be understood as a projection of word vectors into a two-dimensional space. Words are arranged in this space based on a semantical perspective. In this example, the words "king", "queen", "man" and "woman" are represented by vectors in a two-dimensional space. If a same translation from the word "king" to the word "queen" is applied to the word "man", the result points close to the word "woman".

Word embeddings (that is, the vectors 105) can be obtained by the network device 100 in an unsupervised way without the need for labels, as it is e.g. done by the unsupervised learning technique 104. One way to build word embeddings for instance is training a neural network to predict a next word, given a set of previous or surrounding words (such information is available in any natural language, for example being a sequence of ordered words or strings).

Further optionally, the network device 100 can be configured to apply an unsupervised clustering technique to separate the sequence 101 of host identifiers 102 and the corresponding vectors 105 into groups that have distinct characteristics.

The groups having distinct characteristics are then provided to the unsupervised learning technique 104. This is in particular done to improve the quality of the unsupervised learning technique 104 and of learning the vectors 105.

As it is further illustrated in FIG. 2, the unsupervised learning technique 104 optionally may comprise a char embedding technique 205. The char embedding technique 205 operates similar to the word embedding technique, however, on a more granular level, which allows for more precise results when learning the vectors 105. The char embedding technique 205 can be used by the network device 100 as an alternative in any case, in which the NLP technique 203 or the word embedding technique 204 can be used.

In the above mentioned second step, a supervised learning technique 108 can be applied to the vectors 105 for classification of the corresponding host identifiers 102. The supervised learning technique 108 is in particular based on a labelled ground truth 106, which is obtained by the network device 100. The labelled ground truth 106 can be built based on experiments, which are done in a laboratory environment (outside the network device 100), and is then provided to the network device 100. That is, building the labelled ground truth 106 is done only once, and does not need to be repeated for every network in which the network device 100 is going to be used.

As it is going to be described below, that labelled ground truth 106 optionally can be used to train a sequence classification model or a pointer network. The sequence classification model or the pointer network can then be used to classify host identifiers 102 of flows 103 (in particular, into core domains and support domains). Optionally, the labelled ground truth 106 can also be used to determine which host identifiers 102 in the support domain belong to one and the same core domain. In other words, all resources that are required by one web page can be determined.

As it is further illustrated in FIG. 2, the network device 100 optionally can be configured to apply the supervised learning technique 108 to each vector 105, to classify the corresponding host identifier 102 into a first group 206 or a second group 207, corresponding to at least two labels 107 comprised in the labelled ground truth 106.

This classification is generally illustrated in FIG. 2, in which the sequence 101 comprises five host identifiers 102. Based on the five host identifiers, five vectors 105 are learned. As shown, the labelled ground truth 106 comprises three labels 107, but however is not limited to that number.

Based on the vectors 105 and the labels 107 in the labelled ground truth 106, the network device 100 can classify the host identifiers 102 into a first group 206 and a second group 207. As shown in FIG. 2, two host identifiers 102 belong to the first group 206, while three host identifiers 102 belong to the second group 207. In particular, the host identifiers in the first group 206 identify web pages, while the host identifiers 102 in the second group 207 identify resources used by these web pages.

In other words, the first group 206 may comprise host identifiers 102, each of which identifying a web page. Again in other words, the second group 207 may comprise host identifiers 102, each of which identifying a resource loaded by one of the identified web pages.

In particular, to allow for classification of the host identifiers 102 based on the labels 107, the labels 107 of the labelled ground truth 106 may correspond to the first group 206 or the second group 207.

As it is further illustrated in FIG. 2, the supervised learning technique 108 may optionally include applying a ML sequence classification model 208 to each vector 105. The ML sequence classification model 208 in particular enables to detect, if a host identifier 102 belongs to a core domain or a support domain; and/or to cluster host identifiers 102 of support domains that relate to a same core domain.

In particular, the ML sequence classification model 208 can be trained on the labelled ground truth 106. In an alternative embodiment, the labelled ground truth 106 is not required by the network device 100, as long as the ML sequence classification model 208 (which was trained based on the labelled ground truth 106 beforehand) is present in the network device 100. That is, the ML sequence classification model 208 can be trained on the labelled ground truth 106 outside the network device 100. Afterwards, only the ML sequence classification model 208 is provided to the network device 100. The classification of the host identifiers 102 then is performed based on the ML sequence classification model 208. The ML sequence classification model 208 includes the respective information regarding the labelled ground truth 106 and the labels 107, to allow for classification of the host identifiers 102.

In particular, the ML sequence classification model 208 can be, or can be based on a LSTM neural network, a stacked bi-LSTM neural network, or a pointer network architecture.

As it is further illustrated in FIG. 2, the network device 100 can optionally be configured to apply the supervised learning technique 104 to each vector 105, to classify the corresponding host identifier 102 into the first group 206, the second group 207, or a third group 209. The second group 207 comprises the third group 209. In other words, the third group 209 is a subset of the second group 207. The second group 207 generally comprises host identifiers 102 relating to a support domain, respectively, to a resource used by a core domain. The third group 209 comprises host identifiers 102, each of which identifying a resource loaded by one and the same web page in the identified web pages. In other words, the third group 209 identifies these resources, which are required by one specific web page.

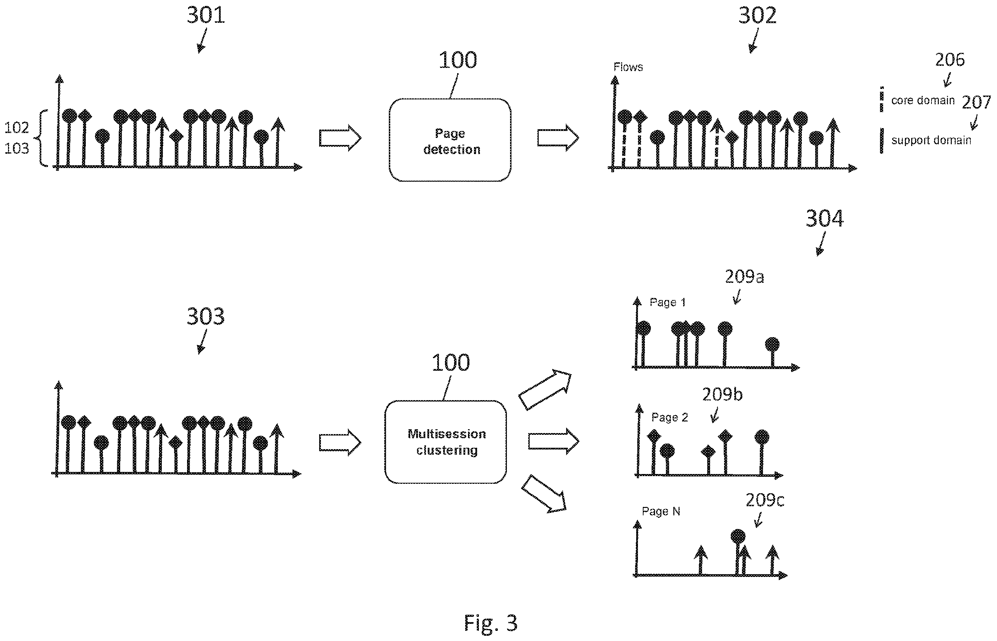

FIG. 3 schematically illustrates how a page detection problem and a multisession clustering problem are solved by the network device 100.

In section 301 of FIG. 3, network flows 103 and their corresponding host identifiers 102 are shown over time. The network flows 103 and the corresponding host identifiers 102 are illustrated as vertical arrows in section 301 (for ease of illustration, reference signs 102 and 103 are only shown in section 301, while this illustration however also applies to sections 302, 303 and 304). As illustrated in section 302, the network device 100 solves the page detection problem by classifying the host identifiers 102 (and thus, also the corresponding flows 103) into a first group 206 (indicated by arrows with a dashed line) and a second group 207 (indicated by arrows with a continuous line). The first group 206 comprises all host identifiers 102 relating to a web page (thus, the pages are detected and the page detection problem is solved), while the second group 207 comprises host identifiers relating to resources of said web pages.

In section 303 of FIG. 3, network flows 103 and their corresponding host identifiers 102 are shown over time. The network flows 103 and the corresponding host identifiers 102 are illustrated as vertical arrows in section 303. As illustrated in section 304, the network device 100 solves the multisession clustering problem by classifying the host identifiers 102 (and thus, also the corresponding flows 103) into a third group 209, which identifies those support domains that belong to one and the same core domain. In other words, the third group 209 clusters the host identifiers 102 of resources relating to one and the same web page loaded during a multisession (of loading several web pages).

FIG. 3 illustrates multisession clustering for several pages, i.e. page 1, page 2, ..., page n. To this end, several instances of third groups 209a, 209b and 209c are shown. Each instance of the third groups is obtained by means of the operating manner of the network device 100 as described above.

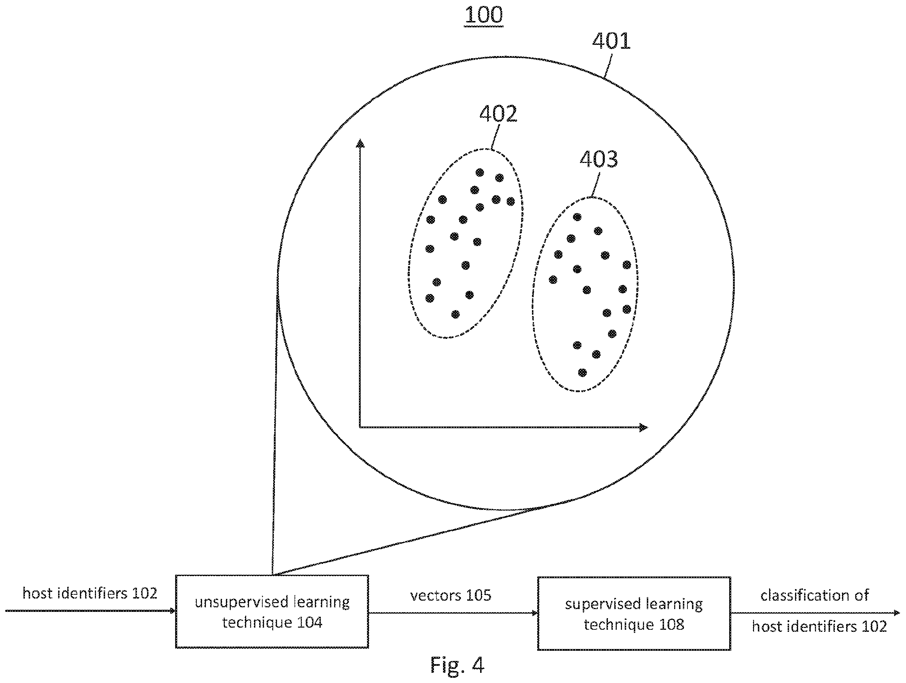

FIG. 4 schematically illustrates an operating scenario of the network device 100. The network device 100 observes host identifiers 102 (domain names 201 or IP addresses 202) as words in a language. In other words, a single web session of opening a web page therefore may be regarded as a sentence with many words. A multisession can be regarded as multiple people talking at the same time.

When applying the unsupervised learning technique 104, the host identifiers 102 are projected into a high-dimensional space (e.g. into the vectors 105) where relationships between host identifiers 102 are represented (similarly to how relationships between words are represented in this space). By operating on the vectors 105 instead of on the host identifiers 102, complex relationships between the host identifiers 102 can be inferred. Moreover, it can be learned what vectors 105 correspond to core domains and what vectors 105 correspond to support domains. Further, vectors 105 that belong to host identifiers 102 of a same web page can be grouped together.

In section 401, FIG. 4 in particular shows vectors 105 (also called domain embeddings) of all core and support domains of a multisession of viewing two concurrent web pages (page1.com 402 and page2.com 403). The vectors 105 are projected into a low two-dimensional space, which makes the host identifiers 102 of each cluster (that is, the cluster of page1.com 402 and the cluster of page2.com 403) visually separable.

The vectors 105 can be learned based on the host identifiers 102, in particular based on a name2vec technique, which embeds domain names 201, or based on an ip2vec technique, which embeds IP addresses 202. These vectors 105 in turn can be used by a supervised learning technique 108 (e.g. a machine learning model) to perform e.g. page detection and multisession clustering.

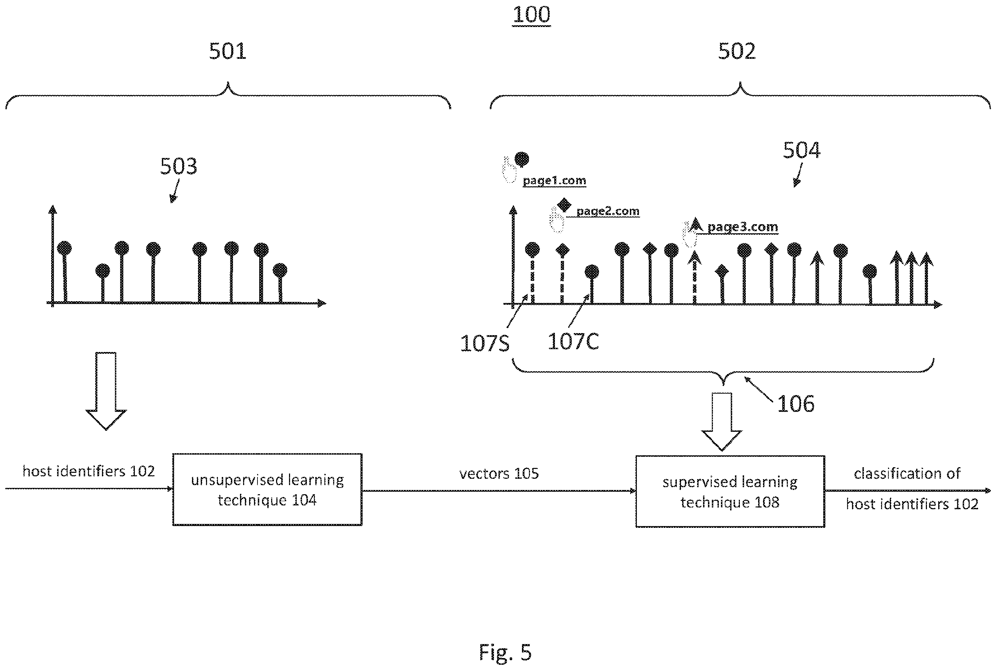

FIG. 5 schematically illustrates another operating scenario of the network device 100. In this operating scenario, two learning phases 501, 502 (of which the first one 501 is unsupervised and the second one 502 is supervised) are described.

As illustrated at the bottom of FIG. 5, in the first phase 501, the network device 100 receives host identifiers 102 (domain names 201 and/or IP addresses 202) as they are observed in raw network traffic 503 (that is, in the flow 103). When applying the unsupervised learning technique 104 (which specifically includes a natural language processing technique 203 and/or a word embedding technique 204 and/or a char embedding technique 205) to the host identifiers 102, the network device 100 first splits the host identifiers 102 into sentences e.g. by using a threshold mechanism. That is, if there is no activity of incoming host identifiers 102 for a predefined amount of time, a full stop is added and a new sentence is started. The network device 100 may then apply NLP, word or char embedding techniques on these sentences separately, to learn embedding vectors (i.e. the vectors 105) for each host identifier 102. Once the unsupervised learning is done, a clustering technique can be applied to the host identifiers 102 and/or the corresponding vectors 105, to e.g. separate host identifiers 102 into clusters of pages (e.g. to group the support domains of each web page together).

In the second phase 502, which is a supervised learning phase, a labelled ground truth 106 is collected, e.g., in lab experiments. The labelled ground truth 106 can comprise web multi sessions 504 with labels 107. Examples of labels 107 can be information, which domains are support domains 107S and which domains are core domains 107C. Further, a label may be included that marks support domains that belong to a same core domain.

The labelled ground truth 106 can then be used to train sequence classification models 208 (e.g. machine learning models) to create a model that transforms an input sequence 101 of host identifiers 102 into an output sequence of "c" (standing for core domain) or "s" (standing for support domain) tags - that is, the classification of the host identifiers is performed (if the goal is to classify host identifiers 102 into core and support domains, that task is referred to as page detection).

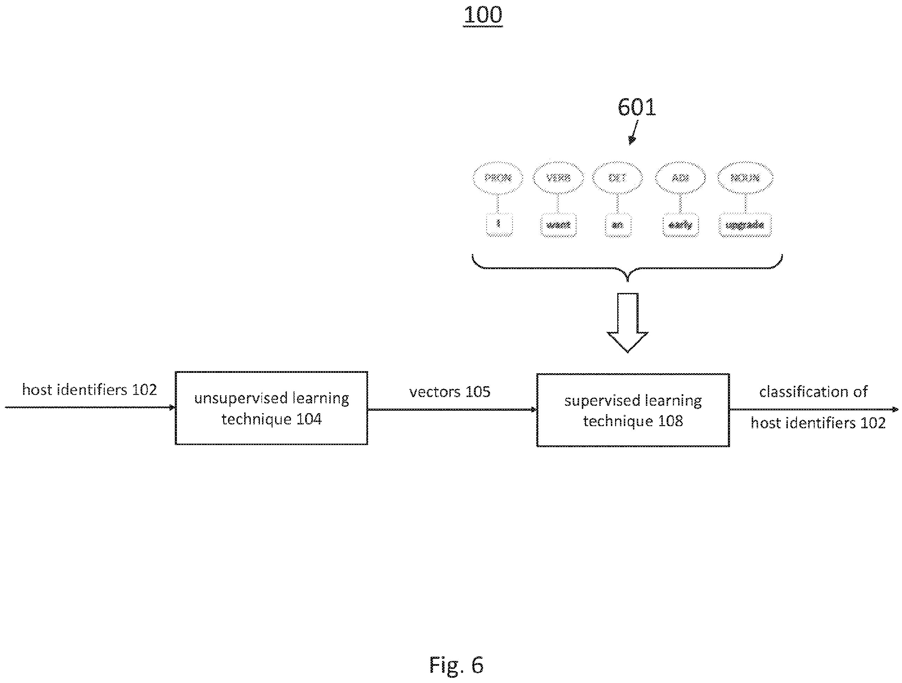

FIG. 6 schematically illustrates another operating scenario of the network device 100. In this operating scenario, the sequence classification model 208 used when applying the supervised learning technique 108 can be a speech tagging model (which is e.g. used in NLP). As illustrated in section 601 of FIG. 6, the goal of speech tagging is to tag sequences of words as "pronoun", "verb", "adjective", "noun", etc. The sequence of words used as input parameters for the speech tagging model corresponds to the sequence of vectors 105 which are subject to the supervised learning technique 108 (which uses the sequence classification model 208). The tags that are output by the sequence classification model 208 being a speech tagging model (not shown in FIG. 6) however are "core domain", "support domain", etc. By using a speech tagging model, a median precision of classifying host identifiers 102 by the speech tagging model into core domain or support domain is 100%. Another benefit is, that the speech tagging model works for a variable size of a multisession (that is, for a variable size of a sequence 101), works for totally unknown web pages, respectively, host identifiers 102, and does not need to be adapted, e.g. when a language of the web pages and corresponding domain names 201 of the host identifiers 102 changes. In this context, also a stacked Bidirectional Long Short Term Memory (LSTM) Neural Network (which is going to be described below) can be used as a speech tagging model. Regarding the host identifiers 102, the unsupervised learning technique 104, the vectors 105 and the classification of host identifiers 102 shown in FIG. 6 the same teaching as described in view of any one of figures 1 to 5 can be applied.

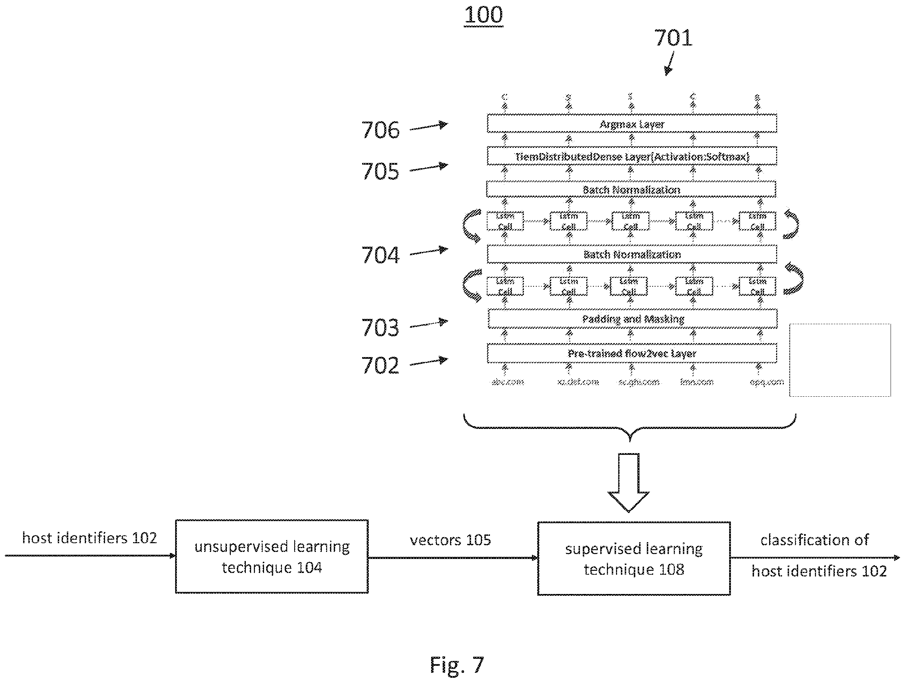

In an operating scenario of the network device 100, which is schematically illustrated in FIG. 7, the application of a stacked Bidirectional LSTM (Bi-LSTM) Neural Network as a sequence classification model 208 is described in more detail. The stacked Bi-LSTM Neural Network shown in section 701 of FIG. 7 is trained based on the labelled ground truth 106. In particular, the stacked Bi-LSTM Neural Network is trained on original sequences 101 of host identifiers 102 (which in particular include domain names 201) to classify these host identifiers 102.

Once the stacked Bi-LSTM Neural Network is trained based on the labeled ground truth 106, the classification of host identifiers 102 works as follows: information corresponding to a sequence 101 of host identifiers 102 is input to a pre-trained flow2vec layer of the stacked Bi-LSTM Neural Network (see step 702). An output of the flow2vec layer is then input to a Padding and Masking layer (see step 703). In a subsequent Batch Normalization process, a supervised learning technique 108 is applied. During that process, information is forwarded between multiple LSTM cells (see step 704). The output of the Batch Normalization process is then provided to a TimeDistributedDense Layer (see step 705), the output of which is provided to an Argmax Layer (see step 706). Finally, the Argmax Layer outputs a tag (e.g. "c" standing for core domain or "s" standing for support domain) corresponding to each host identifier 102, which was input to the stacked Bi-LSTM Neural Network. The output tags classify the host identifiers 102.

Regarding the host identifiers 102, the unsupervised learning technique 104, the vectors 105, and the classification of host identifiers 102 shown in FIG. 7, the same teaching as described in view of any one of figures 1 to 6 can be applied.

By using stacked Bi-L STM Neural Networks, the median precision of classifying host identifiers 102 into core domain or support domain can be 100%. Another benefit is that the stacked Bi LSTM Neural Network works for a variable size of a multisession (that is, for a variable size of a sequence 101), works for totally unknown web pages, respectively host identifiers 102, and does not need to be adapted, e.g. when a language or a geographical origin of the web pages and corresponding domain names 201 of the host identifiers 102 changes.

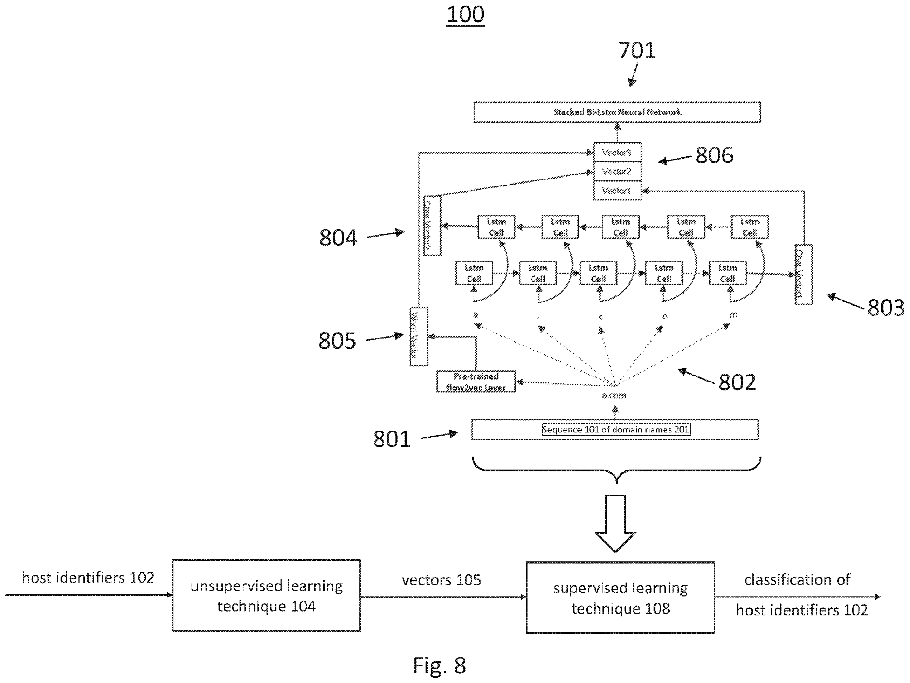

In an operating scenario of the network device 100, which is schematically illustrated in FIG. 8, the stacked bi-LSTM layer 701 is preceded by a char embedding layer. A char-embedding layer according to NLP is similar to regular word embedding except that it is applied to characters instead of words. The results of the char embedding layer, together with a pre-trained word embedding are concatenated before being fed to the stacked bi-L STM layer to build a sequence classification neural network.

As it is illustrated in section 801 of FIG. 8, a sequence 101 of domain names 201 is input to the network device 100. A domain name 201 in this sequence 101 is then split into its characters, as shown in step 802. These characters are processed by multiple LSTM cells for several times, to obtain a first char vector (see step 803) and a second char vector (see step 804).

The domain name 201 is also provided to a pre-trained flow2vec Layer, which obtains a word vector from the domain name 201 (see step 805).

The first char vector, the second char vector and the word vector are then concatenated and provided to a stacked BiLSTM Neural Network 701, as e.g. described in FIG. 7 (see step 806). The overall precision of this solution is even higher compared to the overall precision of the solutions described in FIG. 6 and FIG. 7.

Regarding the host identifiers 102, the unsupervised learning technique 104, the vectors 105 and the classification of host identifiers 102 shown in FIG. 8, the same teaching as described in view of any one of figures 1 to 7 can be applied.

In another operating example, a pointer network architecture can be used as a supervised learning technique instead of the stacked Bi-LSTM neural network to classify host identifiers 102. An input of the pointer network architecture is a sequence 101 of host identifiers 102, an output is a sequence of the same length, where each host identifier 102 in the output sequence "points" towards the host identifier in the input sequence 101 being the core domain to which the host identifier in the output sequence belongs.

In another specific embodiment, a conventional solution for network analysis can be used on top of the classification provided by the network device 100. Thereby, the conventional solution can be extended to work with encrypted network traffic and with web pages, which the conventional solution was not trained for.

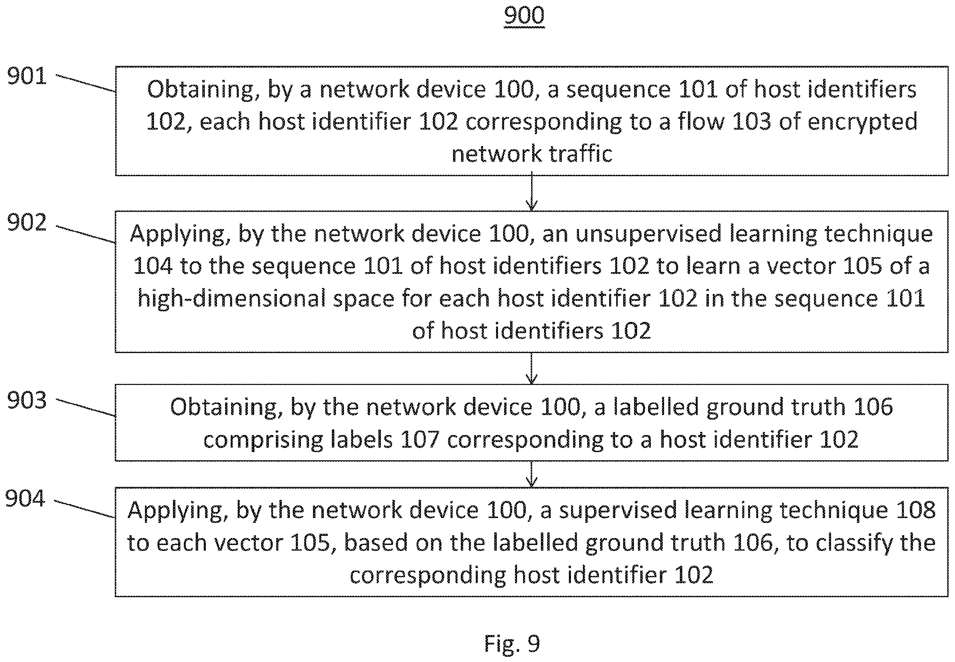

FIG. 9 shows a flowchart of a method 900 for host identifier classification according to an embodiment of the present disclosure. The method 900 comprises a first step of obtaining 901, by a network device 100, a sequence 101 of host identifiers 102, each host identifier 102 corresponding to a flow 103 of encrypted network traffic. The method comprises a second step of applying 902, by the network device 100, an unsupervised learning technique 104 to the sequence 101 of host identifiers 102 to learn a vector 105 of a high-dimensional space for each host identifier 102 in the sequence 101. The method comprises a third step of obtaining 903, by the network device 100, a labelled ground truth 106 comprising labels 107 corresponding to a host identifier 102. The method comprises a last step of applying 904, by the network device 100, a supervised learning technique 108 to each vector 105 based on the labeled ground truth 106, to classify the corresponding host identifier 102.

Generally, each host identifier comprises at least one of a domain name and an IP address.

The present disclosure has been described in conjunction with various embodiments as examples as well as implementations. However, other variations can be understood and effected by those persons skilled in the art and practicing the claimed disclosure, from the studies of the drawings, this disclosure, and the independent claims. In the claims as well as in the description, the word "comprising" does not exclude other elements or steps and the indefinite article "a" or "an" does not exclude a plurality. A single element or other unit may fulfill the functions of several entities or items recited in the claims. The mere fact that certain measures are recited in the mutual different dependent claims does not indicate that a combination of these measures cannot be used in an advantageous implementation.

## Claims

1. A network device (100) for host identifier classification, wherein the network device (100) is configured to:
- obtain a sequence (101) of host identifiers (102), each host identifier (102) corresponding to a flow of encrypted network traffic (103);
- apply an unsupervised learning technique (104) to the sequence (101) of host identifiers (102) to learn a vector (105) of a high-dimensional space for each host identifier (102) in the sequence (101) of host identifiers (102);
- obtain a labelled ground truth (106) comprising labels (107) corresponding to a host identifier (102); and
- apply a supervised learning technique (108) to each vector (105), based on the labelled ground truth (106), to classify the corresponding host identifier (102),
wherein each host identifier (102) comprises at least one of a domain name (201) and an IP address (202).

2. The network device (100) according to claim 1, wherein the unsupervised learning technique (104) comprises at least one of a natural language processing technique (203) and a word embedding technique (204).

3. The network device (100) according to any of the preceding claims, wherein the unsupervised learning technique (104) comprises a char embedding technique (205).

4. The network device (100) according to any of the preceding claims, further configured to apply the supervised learning technique (108) to each vector (105) to classify the corresponding host identifier (102) into a first group (206) or a second group (207), corresponding to at least two labels (107) comprised in the labelled ground truth (106).

5. The network device (100) according to any of the preceding claims, further configured to apply an unsupervised clustering technique to separate the sequence (101) of host identifiers (102) and the corresponding vectors (105) into groups that have distinct characteristics.

6. The network device (100) according to any of the preceding claims, wherein the network device (100) is configured to apply the supervised learning technique (108) by applying a machine learning sequence classification model (208) to each vector (105).

7. The network device (100) according to any of the preceding claims, wherein the machine learning sequence classification model (208) is configured to be trained on the labelled ground truth (106).

8. The network device (100) according to any one of claims 5 to 7, wherein the labels (107) of the labelled ground truth (106) correspond to the first group (206) or the second group (207).

9. The network device (100) according to any one of claims 5 to 8 wherein the first group (206) comprises host identifiers (102), each of which identifying a web page.

10. The network device (100) according to claim 9, wherein the second group (207) comprises host identifiers (102), each of which identifying a resource loaded by one of the identified web pages.

11. The network device (100) according to claim 10, wherein the network device (100) is further configured to apply the supervised learning technique (108) to each vector (105) to classify the corresponding host identifier (102) into the first group (206), the second group (207), or a third group (209), wherein the second group (207) comprises the third group (209), and wherein the third group (209) comprises host identifiers (102), each of which identifying a resource loaded by a same web page of the identified web pages.

12. The network device (100) according to any of claims 6 to 11, wherein the machine learning sequence classification model (208) is based on a long short term memory, LSTM, neural network, a stacked bi LSTM neural network, or a pointer network architecture.

13. A method (900) for host identifier classification, the method (900) comprising:
- obtaining (901), by a network device (100), a sequence (101) of host identifiers (102), each host identifier (102) corresponding to a flow (103) of encrypted network traffic;
- applying (902), by the network device (100), an unsupervised learning technique (104) to the sequence (101) of host identifiers (102) to learn a vector (105) of a high-dimensional space for each host identifier (102) in the sequence (101) of host identifiers (102);
- obtaining (903), by the network device (100), a labelled ground truth (106) comprising labels (107) corresponding to a host identifier (102); and
- applying (904), by the network device (100), a supervised learning technique (108) to each vector (105), based on the labeled ground truth (106), to classify the corresponding host identifier (102),
wherein each host identifier (102) comprises at least one of a domain name (201) and an IP address (202).

14. A computer program product comprising instructions which, when executed by a computer, cause the computer to carry out the steps of the method (900) according to claim 13.

## Patentansprüche

1. Netzwerkvorrichtung (100) für eine Host-Kennungsklassifizierung, wobei die Netzwerkvorrichtung (100) konfiguriert ist zum:
- Erhalten einer Sequenz (101) von Host-Kennungen (102), wobei jede Host-Kennung (102) einem Fluss eines verschlüsselten Netzwerkverkehrs (103) entspricht;
- Anwenden einer Methode (104) eines unüberwachten Lernens auf die Sequenz (101) von Host-Kennungen (102), um einen Vektor (105) eines hochdimensionalen Raums für jede Host-Kennung (102) in der Sequenz (101) von Host-Kennungen (102) zu lernen;
- Erhalten einer etikettierten Ground Truth (106), die Etiketten (107), die einer Host-Kennung (102) entsprechen, umfasst; und
- Anwenden einer Methode (108) eines überwachten Lernens auf jeden Vektor (105) basierend auf der etikettierten Ground Truth (106), um die entsprechende Host-Kennung (102) zu klassifizieren,
wobei jede Host-Kennung (102) mindestens eines von einem Domänennamen (201) und einer IP-Adresse (202) umfasst.

2. Netzwerkvorrichtung (100) nach Anspruch 1, wobei die Methode (104) des unüberwachten Lernens mindestens eine von einer Verarbeitungsmethode (203) für natürliche Sprache und einer Worteinbettungsmethode (204) umfasst.

3. Netzwerkvorrichtung (100) nach einem der vorstehenden Ansprüche, wobei die Methode (104) des unüberwachten Lernens eine Zeicheneinbettungsmethode (205) umfasst.

4. Netzwerkvorrichtung (100) nach einem der vorstehenden Ansprüche, die ferner konfiguriert ist, um die Methode (108) des überwachten Lernens auf jeden Vektor (105) anzuwenden, um die entsprechende Host-Kennung (102) in eine erste Gruppe (206) oder eine zweite Gruppe (207) zu klassifizieren, die mindestens zwei Etiketten (107), die in der etikettierten Ground Truth (106) umfasst sind, entsprechen.

5. Netzwerkvorrichtung (100) nach einem der vorstehenden Ansprüche, die ferner konfiguriert ist, um eine Methode eines unüberwachten Clusterns anzuwenden, um die Sequenz (101) von Host-Kennungen (102) und die entsprechenden Vektoren (105) in Gruppen, die unterschiedliche Eigenschaften aufweisen, zu unterteilen.

6. Netzwerkvorrichtung (100) nach einem der vorstehenden Ansprüche, wobei die Netzwerkvorrichtung (100) konfiguriert ist, um die Methode (108) des überwachten Lernens durch Anwenden eines Maschinenlernsequenzklassifizierungsmodells (208) auf jeden Vektor (105) anzuwenden.

7. Netzwerkvorrichtung (100) nach einem der vorstehenden Ansprüche, wobei das Maschinenlernsequenzklassifizierungsmodell (208) konfiguriert ist, um mit der etikettierten Ground Truth (106) trainiert zu werden.

8. Netzwerkvorrichtung (100) nach einem der Ansprüche 5 bis 7, wobei die Etiketten (107) der etikettierten Ground Truth (106) der ersten Gruppe (206) oder der zweiten Gruppe (207) entsprechen.

9. Netzwerkvorrichtung (100) nach einem der Ansprüche 5 bis 8, wobei die erste Gruppe (206) Host-Kennungen (102), von denen jede eine Webseite kennzeichnet, umfasst.

10. Netzwerkvorrichtung (100) nach Anspruch 9, wobei die zweite Gruppe (207) Host-Kennungen (102) umfasst, von denen jede eine Ressource, die durch eine der gekennzeichneten Webseiten geladen wird, kennzeichnet.

11. Netzwerkvorrichtung (100) nach Anspruch 10, wobei die Netzwerkvorrichtung (100) ferner konfiguriert ist, um die Methode (108) des überwachten Lernen auf jeden Vektor (105) anzuwenden, um die entsprechende Host-Kennung (102) in die erste Gruppe (206), die zweite Gruppe (207) oder eine dritte Gruppe (209) zu klassifizieren, wobei die zweite Gruppe (207) die dritte Gruppe (209) umfasst und wobei die dritte Gruppe (209) Host-Kennungen (102) umfasst, von denen jede eine Ressource, die durch eine gleiche Webseite der gekennzeichneten Webseiten geladen wird, kennzeichnet.

12. Netzwerkvorrichtung (100) nach einem der Ansprüche 6 bis 11, wobei das Maschinenlernsequenzklassifizierungsmodell (208) auf einem neuronalen Netzwerk eines langen Kurzzeitgedächtnisses, LSTM, einem neuronalen Netzwerk eines gestapelten Bi-LSTM oder einer Zeigernetzwerkarchitektur basiert.

13. Verfahren (900) für die Host-Kennungsklassifizierung, wobei das Verfahren (900) umfasst:
- Erhalten (901), durch eine Netzwerkvorrichtung (100), einer Sequenz (101) von Host-Kennungen (102), wobei jede Host-Kennung (102) einem Fluss (103) des verschlüsselten Netzwerkverkehrs entspricht;
- Anwenden (902), durch die Netzwerkvorrichtung (100), einer Methode (104) des unüberwachten Lernens auf die Sequenz (101) von Host-Kennungen (102), um einen Vektor (105) eines hochdimensionalen Raums für jede Host-Kennung (102) in der Sequenz (101) von Host-Kennungen (102) zu lernen;
- Erhalten (903), durch die Netzwerkvorrichtung (100), einer etikettierten Ground Truth (106), die Etiketten (107), die einer Host-Kennung (102) entsprechen, umfasst; und
- Anwenden (904), durch die Netzwerkvorrichtung (100), einer Methode (108) des überwachten Lernens auf jeden Vektor (105) basierend auf der etikettierten Ground Truth (106), um die entsprechende Host-Kennung (102) zu klassifizieren,
wobei jede Host-Kennung (102) mindestens eines von einem Domänennamen (201) und einer IP-Adresse (202) umfasst.

14. Computerprogrammprodukt, das Anweisungen umfasst, die, wenn sie durch einen Computer ausgeführt werden, den Computer veranlassen, die Schritte des Verfahrens (900) nach Anspruch 13 durchzuführen.

## Revendications

1. Dispositif réseau (100) pour une classification d'identifiants d'hôtes, dans lequel le dispositif réseau (100) est configuré pour :
- obtenir une séquence (101) d'identifiants d'hôtes (102), chaque identifiant d'hôte (102) correspondant à un flux de trafic sur un réseau chiffré (103) ;
- appliquer une technique d'apprentissage non supervisé (104) à la séquence (101) d'identifiants d'hôtes (102) pour apprendre un vecteur (105) d'un espace à haute dimension pour chaque identifiant d'hôte (102) dans la séquence (101) d'identifiants d'hôtes (102) ;
- obtenir une vérité terrain étiquetée (106) comprenant des étiquettes (107) correspondant à un identifiant d'hôte (102) ; et
- appliquer une technique d'apprentissage supervisé (108) à chaque vecteur (105), sur la base de la vérité terrain étiquetée (106), afin de classer l'identifiant d'hôte (102) correspondant,
dans lequel chaque identifiant d'hôte (102) comprend au moins l'un parmi un nom de domaine (201) et une adresse IP (202).

2. Dispositif réseau (100) selon la revendication 1, dans lequel la technique d'apprentissage non supervisé (104) comprend au moins l'une parmi une technique de traitement de langage naturel (203) et une technique de plongement lexical (204).

3. Dispositif réseau (100) selon l'une quelconque des revendications précédentes, dans lequel la technique d'apprentissage non supervisé (104) comprend une technique de plongement de caractères (205).

4. Dispositif réseau (100) selon l'une quelconque des revendications précédentes, en outre configuré pour appliquer la technique d'apprentissage supervisé (108) à chaque vecteur (105) pour classer l'identifiant d'hôte (102) correspondant dans un premier groupe (206) ou un deuxième groupe (207), correspondant à au moins deux étiquettes (107) comprises dans la vérité terrain étiquetée (106).

5. Dispositif réseau (100) selon l'une quelconque des revendications précédentes, en outre configuré pour appliquer une technique de regroupement non supervisé pour séparer la séquence (101) d'identifiants d'hôtes (102) et les vecteurs (105) correspondants en groupes qui ont des caractéristiques distinctes.

6. Dispositif réseau (100) selon l'une quelconque des revendications précédentes, dans lequel le dispositif réseau (100) est configuré pour appliquer la technique d'apprentissage supervisé (108) en appliquant un modèle de classification de séquences d'apprentissage automatique (208) à chaque vecteur (105).

7. Dispositif réseau (100) selon l'une quelconque des revendications précédentes, dans lequel le modèle de classification de séquences d'apprentissage automatique (208) est configuré pour être entraîné sur la vérité terrain étiquetée (106).

8. Dispositif réseau (100) selon l'une quelconque des revendications 5 à 7, dans lequel les étiquettes (107) de la vérité terrain étiquetée (106) correspondent au premier groupe (206) ou au deuxième groupe (207).

9. Dispositif réseau (100) selon l'une quelconque des revendications 5 à 8, dans lequel le premier groupe (206) comprend des identifiants d'hôtes (102), chacun d'entre eux identifiant une page sur la toile.

10. Dispositif réseau (100) selon la revendication 9, dans lequel le deuxième groupe (207) comprend des identifiants d'hôtes (102), chacun d'entre eux identifiant une ressource chargée par l'une des pages sur la toile identifiées.

11. Dispositif réseau (100) selon la revendication 10, dans lequel le dispositif réseau (100) est en outre configuré pour appliquer la technique d'apprentissage supervisé (108) à chaque vecteur (105) pour classer l'identifiant d'hôte (102) correspondant dans le premier groupe (206), le deuxième groupe (207) ou un troisième groupe (209), dans lequel le deuxième groupe (207) comprend le troisième groupe (209), et dans lequel le troisième groupe (209) comprend des identifiants d'hôtes (102), chacun d'entre eux identifiant une ressource chargée par une même page sur la toile parmi les pages sur la toile identifiées.

12. Dispositif réseau (100) selon l'une quelconque des revendications 6 à 11, dans lequel le modèle de classification de séquences d'apprentissage automatique (208) est basé sur un réseau neuronal de mémoire à long et court terme, LSTM, un réseau neuronal biLSTM empilé ou une architecture de réseau à pointeurs.

13. Procédé (900) pour une classification d'identifiants d'hôtes, le procédé (900) comprenant :
- l'obtention (901), par un dispositif réseau (100), d'une séquence (101) d'identifiants d'hôtes (102), chaque identifiant d'hôte (102) correspondant à un flux (103) de trafic sur un réseau chiffré ;
- l'application (902), par le dispositif réseau (100), d'une technique d'apprentissage non supervisé (104) à la séquence (101) d'identifiants d'hôtes (102) pour apprendre un vecteur (105) d'un espace à haute dimension pour chaque identifiant d'hôte (102) dans la séquence (101) d'identifiants d'hôtes (102) ;
- l'obtention (903), par le dispositif réseau (100), d'une vérité terrain étiquetée (106) comprenant des étiquettes (107) correspondant à un identifiant d'hôte (102) ; et
- l'application (904), par le dispositif réseau (100), d'une technique d'apprentissage supervisé (108) à chaque vecteur (105), sur la base de la vérité terrain étiquetée (106), pour classer l'identifiant d'hôte (102) correspondant,
dans lequel chaque identifiant d'hôte (102) comprend au moins l'un parmi un nom de domaine (201) et une adresse IP (202).

14. Produit-programme informatique comprenant des instructions qui, lorsqu'elles sont exécutées par un ordinateur, amènent l'ordinateur à effectuer les étapes du procédé (900) selon la revendication 13.
